# EUROPEAN PATENT SPECIFICATION

(11) **EP 0 428 798 B1**
(45) Date of publication and mention of the grant of the patent: **13.07.1994**
(21) Application number: 89312052.7
(22) Date of filing: 21.11.1989
(51) Int. Cl.: F16B 21/02, F16B 21/08, F16B 7/04, A46B 7/02

(54) **Connector**
Verbinder
Connecteur

(43) Date of publication of application: 29.05.1991
(73) Proprietor: CLICK CONNECTIONS CORPORATION, London Ontario N6A 5P2 (CA)
(72) Inventor: Butler, Peter Richard, London, Ontario (CA)
(74) Representative: Lucas, Brian Ronald

(56) References cited:
- FR-A- 2 131 641
- GB-A- 2 134 965
- US-A- 2 416 684
- US-A- 3 964 364

## Description

### FIELD OF THE INVENTION

This invention relates to a connector for releasably connecting and locking a first member to a second member. One particular use for such a connector is for releasably connecting and locking a toothbrush handle to a toothbrush head.

### BACKGROUND OF THE INVENTION

Whilst the connector of the present invention has various applications, one such application is for use as a toothbrush connector, and specific reference will be made to such an embodiment for exemplifying the invention.

It is desirable to provide a two-part toothbrush comprising a first handle portion and a second head portion. This necessitates a connection between the two portions. One reason for providing a two-part toothbrush is that toothbrushes readily wear out during use. Rather than being thrown out, the toothbrush is usually used beyond its useful life. A further reason for providing a two-part toothbrush is that a one-part toothbrush is ill-adapted for travelling and storage. In addition, it would be advantageous to have a clean toothbrush head available for use at one's destination or at any location at which it is desired to brush one's teeth. To make the toothbrush a more versatile item of dental hygiene, it would also be advantageous to provide different types of heads for use with a single handle.

There are many types of connectors in the prior art but there still exists a need for a useful connector for releasably connecting and locking a toothbrush head to a handle. The main disadvantage of the prior art connectors, such as the one disclosed in US Patent No. 2 416 684 to Fischer, is the risk of disconnection of the portions during actual use of the toothbrush. The risk of disconnection may be the result of an improper connection of the two separate portions by the user as well as the substantial forces applied to the toothbrush during use. Consequently, a need exists for a connector which may be positively locked after connection to prevent disconnection during use.

GB-A-2 134 965 discloses a connector for releasably connecting a first member to a second member including a connecting member extending axially from an end of the first member and a locking member extending from an end of the second member.

According to one aspect of the invention, there is provided a connector for releasably connecting a first member to a second member, wherein said first member includes a connecting member extending therefrom, and said second member includes a locking member extending therefrom,
characterized in that said connector further comprises
an intermediate member having a passageway extending therethrough and defining a retaining shoulder in said passageway for releasable reciprocal connection to the connecting member; and
means for connecting the locking member to the intermediate member for relative rotation therebetween,
the arrangement being such that when said locking member is inserted in one end of said passageway said means co-operate to permit said locking member to be rotated relative to said intermediate member whilst inhibiting separation of said second member and said intermediate member, and when said connecting member is inserted in the other end of said passageway said connecting member engages said retaining shoulder, rotation of said locking member to a first position relative to said connecting member inhibiting separation of said first member from said intermediate member and rotation of said locking member to a second position relative to said connecting member permitting withdrawal of said connecting member from said passageway and thereby separation of said first member from said second member.

Preferably, the locking member is releasably connected to the intermediate member.

Advantageously, said connecting member includes two resilient arms, the ends of each of said resilient arms having retaining surfaces for co-operation with said retaining shoulder of said intermediate member.

Preferably, said ends of each of said resilient arms have forward conical guide surfaces for co-operation with the inner surface of said passageway.

Advantageously, said ends of each of said resilient arms have internal cam surfaces for co-operation with said locking member.

Preferably, said locking member includes a circular rod having a slot through the rod, said means for connecting the locking member to the intermediate member comprising detent means on the outer surface of said circular rod and detent grooves in said intermediate member having enlarged stop portions for co-operation with said detent means.

Advantageously, said locking member comprises a rod having a pair of opposed tapered surfaces and a pair of opposed conical surfaces for juxtaposition with respect to said connecting member.

Preferably, said first member comprises a toothbrush head.

In the specific embodiment being described - i.e., a toothbrush, the first member may be attached to a toothbrush head or may be one end of a toothbrush head itself. The second member may be attached to a handle for a toothbrush or may be one end of the handle itself.

According to another aspect of the present invention there is provided a method for releasably connecting and locking a first member to a second member which method comprises:
providing said first member with a connecting member; and
providing said second member with a locking member;
characterized in that said method further comprises:
providing an intermediate member having a passageway therethrough;
providing a retaining shoulder in said passageway for releasable reciprocal connection to the connecting member;
providing said locking member with means for connecting the locking member to the intermediate member for relative rotation therebetween;
providing said locking member and said intermediate with means rotatable to inhibit disconnection of the connecting member of the first member from the retaining shoulder of the intermediate member when said connecting member of said first member is inserted in said intermediate member;
bringing the connecting member and the locking member into operative juxtaposition within said passageway of said intermediate member and rotating said locking member to a position in which said means inhibits separation of said first member from said intermediate member.

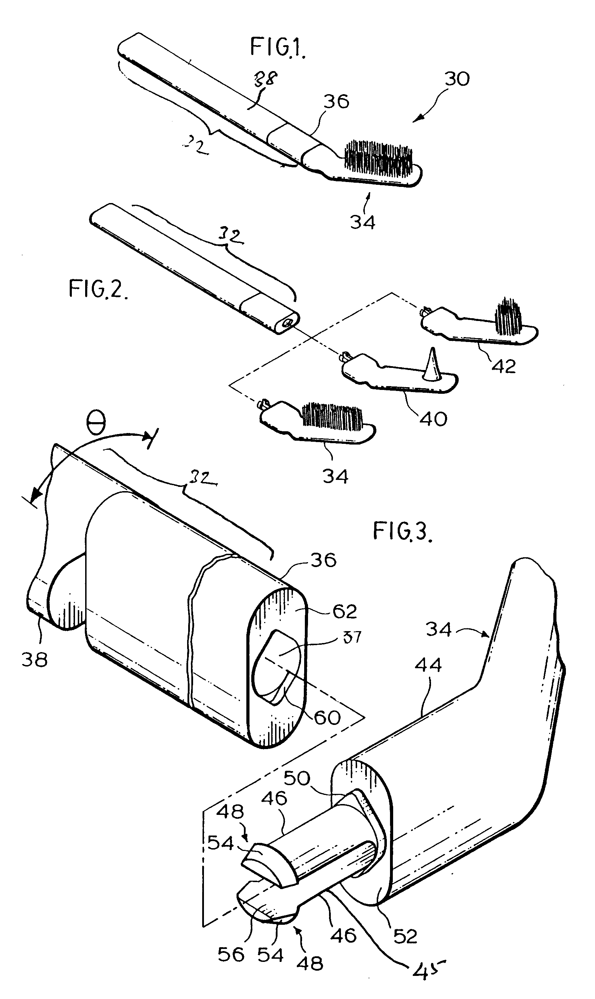

For a better understanding of the present invention and to show how the same may be carried into effect, reference will now be made, by way of example, to the accompanying drawings, in which:-
Figure 1 generally depicts in perspective a connected two-part toothbrush;
Figure 2 is a general view and shows in perspective a disconnected two-part toothbrush having two additional connectable heads;
Figure 3 is a perspective view showing part of a first member and an intermediate member rotatably mounted on a second member;
Figure 4 is a perspective view of the intermediate member and part of the second member prior to assembly;
Figure 5 is a side elevational view of part of the second member and the intermediate member (in cross-section) prior to assembly;
Figure 6 is a view similar to that of Figure 5 , with the locking member of the second member entering a passageway in the intermediate member;
Figure 7 is a view similar to those of Figures 5 and 6, with the intermediate member and locking member connected together;
Figure 8 is a cross-sectional view of the locking member connected to the intermediate member prior to insertion of the connecting member of the first member;
Figure 9 is a view similar to that of Figure 8, showing the connecting member partially inserted into the passageway in the intermediate member;
Figure 10 is a view similar to those of Figures 8 and 9, showing the connecting member releasably connected to the intermediate member;
Figure 11 is a perspective view of the Figure 10 assembly, having a portion of the intermediate member removed;
Figure 12 is a view similar to that of Figure 11, showing the locking member rotated relative to the connecting member, thereby inhibiting withdrawal of the connecting member from the passageway;
Figure 13 is a cross-sectional view of the locked connection;
Figure 14 is an enlarged view of a portion of Figure 13, showing the effect of tension applied to the connection;
Figure 15 is an end view, partially in section, showing the rotatable attachment of the intermediate member to the locking member;
Figure 16 is a view similar to that of Figure 15, showing the arrangement of Figure 15, in relative rotation; and
Figure 17 is a view similar to those of Figures 15 and 16, showing the locking member once rotation is completed
Referring to Figure 1, a toothbrush 30 comprises a handle assembly 32 and toothbrush head 34. The handle assembly 32 includes a second member 38 and an intermediate portion 36.

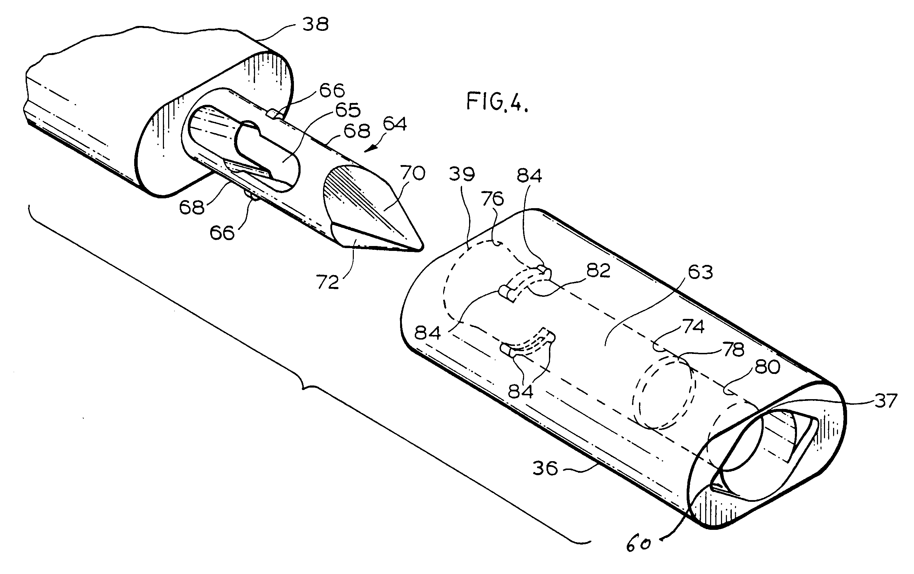

Referring to Figure 2, a typical toothbrush head 34 is shown along with optional toothbrush heads 40 and 42 which may be selectively connected to the handle assembly 32.

Figure 3 shows the assembly point for connecting the toothbrush head 34 to the handle assembly 32. The toothbrush head 34 has a first member 44, which in this embodiment, is ovoid in cross-section. A connecting member 45 comprises a pair of resilient arms 46 which extend axially from the end 52 of the first member 44 for insertion into the connection with the intermediate member 36. The ends 48 of the resilient arms 46 are provided with forward conical guide surfaces 54 and internal cam surfaces 56. Further, retaining surfaces 57 are provided rearward of the forward conical guide surfaces 54. In the preferred embodiment, there is a key segment 50 surrounding the base of the connecting member 45.

It is to be noted that while the cross-section of the parts of the connector is ovoid, a cross-section of any other suitable shape may be used.

In Figure 3, the handle 38 is shown rotated 90° (angle ϑ) out of registry with intermediate member 36, the condition under which component assembly takes place.

The intermediate member 36 is sleeve-like and has two ends 37 and 39 respectively. A circular axial passageway 63, shown in phantom in Figure 4, extends between ends 37 and 39 of the intermediate member 36. A tapered entry 76 is provided at end 39 of the intermediate member 36. A tapered entry 77 (shown in Figures 4 to 7 only) is provided at the end 37. Further, the passageway 63 has a first diameter at a first portion 80 and a second larger diameter at a second portion 74. The difference between the diameters is due to a sloping retaining shoulder 78 within the passageway 63 between the first portion 80 and the second portion 74 of the intermediate member 36. Opposing internal detent grooves 82 are provided near end 39 of the intermediate member 36. Enlarged stop portions 84 at either end of the detent grooves 82 are provided.

The intermediate member 36 is rotatably attached to the second member 38, as will be more particularly described hereinafter.

In Figure 4, the second member 38 and the intermediate member 36 are shown axially aligned and disengaged. The second member 38 has a circular locking member 64 extending axially from one end of the second member 38 for insertion into the intermediate member 36, as will be more particularly described hereinafter. A slot 65 is provided in a portion of the locking member 64, which divides the locking member into thin segment portions 68 on the surface of which are located raised detents 66. The diameter of the locking member 64 taken across the raised detents 66 is greater than the diameter of the second portion 74 of the passage 63 of the intermediate member 36. The forward end of the locking member 64 has a pair of opposed tapered surfaces 70 and a pair of opposed conical surfaces 72.

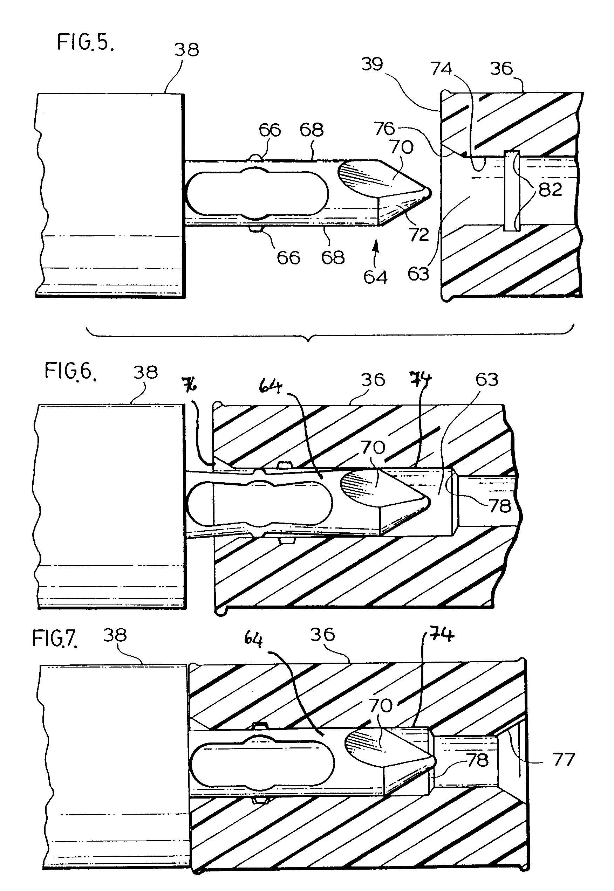

Referring to Figures 5, 6 and 7, the method of assembly of the locking member 64 within the intermediate member 36 is shown. Figure 5 depicts the components prior to assembly. Figure 6 depicts initial assembly with the locking element 64 partially inserted into the axial passageway 63 of the intermediate member 36. The conical tapered entry 76 of the intermediate member 36 facilitates insertion of the locking member 64. The thin segment portions 68 bow inwardly to permit the entry of the locking member 64 into the passageway 63 of the intermediate member 36. The biasing force is released when the detent grooves 82 receive the detents 66, thereby connecting the second member 38 to the intermediate member 36 for relative rotation within the arc length of the grooves 82. It is to be noted that the segment portions 68 are fully released only at the enlarged stop 84. Through all the intermediate points along the arc length of grooves 82, the segment portions 68 are biased slightly inwardly. The detents 66 snap outwardly into place at the enlarged stop portions 84 and eliminate slack in the rotatable connection. The rotational alignment of the second member 38 to the intermediate member 36 may be maintained during use, and the user has a further positive indication when the limit of relative rotation has been reached.

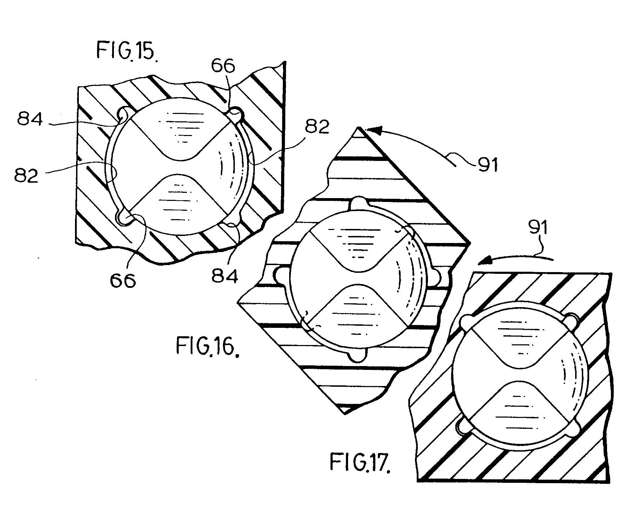

As illustrated in Figures 15 to 17, the rotational feature and the position of the detents 66 relative to the enlarged stop portions 84 is shown in various stages of rotation of the intermediate member 36 when the latter is moved in the direction of arrow 91.

In Figure 7, it can be seen that the end of the locking member 64 overlies the retaining shoulder 78 of the intermediate member 36, upon complete insertion.

In the preferred embodiment, the intermediate member 36 is permanently assembled to the second member 38, and all that remains to be done is for the user to connect and lock the toothbrush head 40, 42 or 34 to the handle assembly 32.

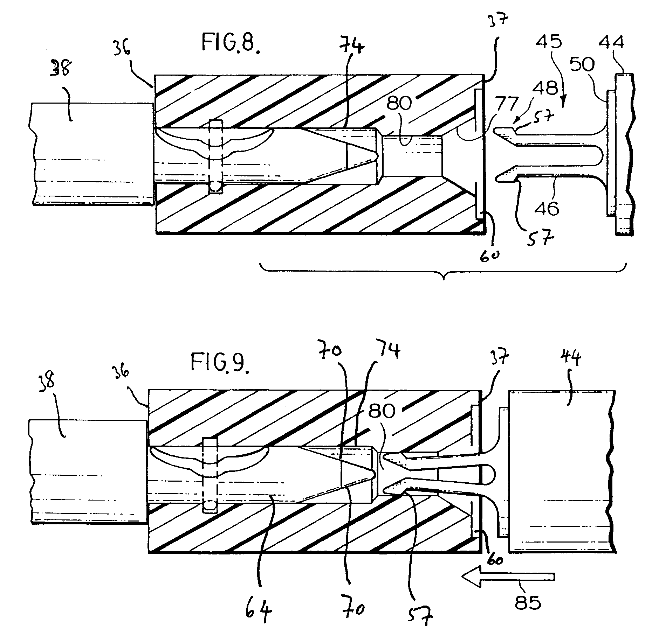

Referring to Figures 8, 9 and 10, the assembly of the connector is now described. The connecting member 45 is releasably secured within the intermediate member 36 by insertion into the passageway 63. The front portion of the passageway 63 contains a recess 60 shaped to receive the key segment 50 of connecting member 45, which aligns the connecting member 45 within the intermediate member 36 and with the locking member 64, as will be described. Locking of the connector is achieved by rotating the second member 38 through angle ϑ (shown in Figure 3) relative to the connecting member 45.

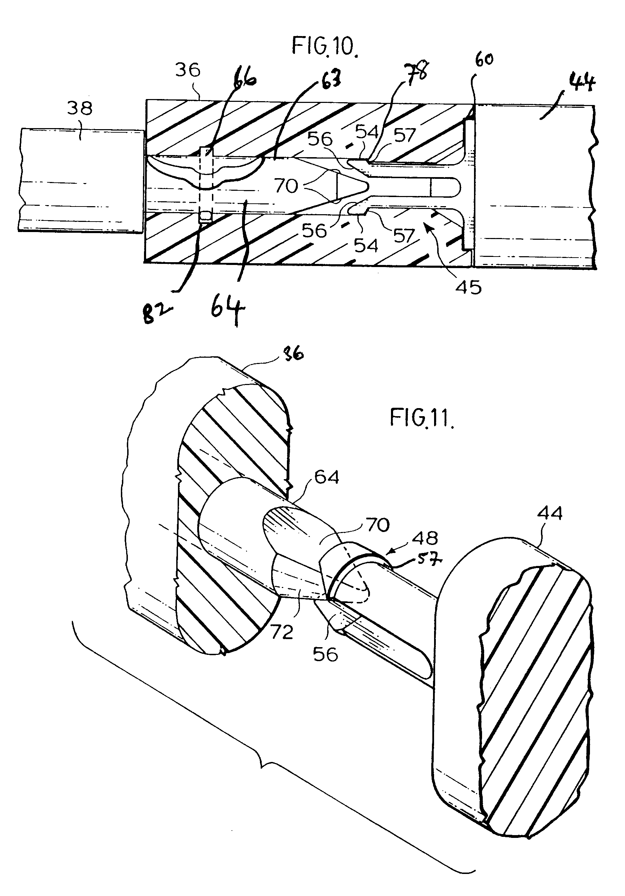

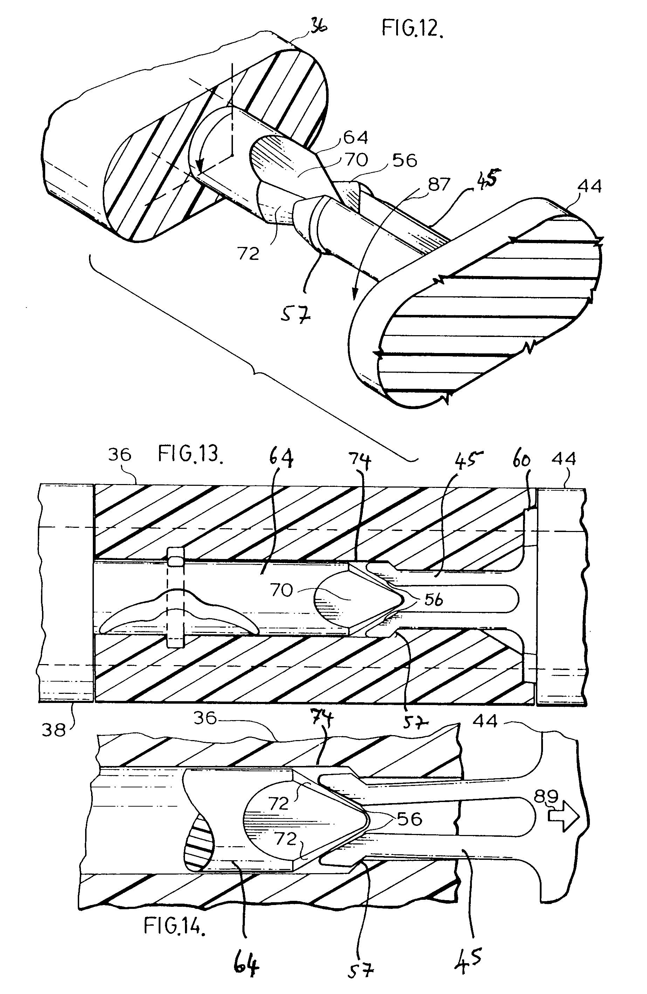

Figure 9 shows the partially assembled connector. Since the diameter of the first portion 80 of the axial passageway 63 is smaller than the diameter presented by the forward conical guide surfaces 54, the resilient arms 46 bias inwardly during insertion in the direction of the arrow 85 as shown in Figure 9, and snap outwardly when the retaining shoulder 78 is reached as shown in Figure 10. At this point, the retaining surfaces 57 of the resilient arms 46 engage the retaining shoulder 78. It is to be noted, however, that at this stage a pulling action on the first member 44 will also cause release of the connecting member 45 from the intermediate member 36. Thus, means must be provided to lock and secure the connecting member 45 within the intermediate member 36. This is generally achieved by rotation of the second member 38 and consequent rotation of the locking member 64, such that the conical surfaces 72 of the locking member 64 are rotated into juxtaposition with respect to the cam surfaces 56 of the connecting member 45, as shown in Figures 12 and 13. If a force is applied in the direction shown by arrow 89 (Fig. 14) the resilient arms 46 will engage against the retaining shoulder 78 and inhibit separation.

It can be appreciated that the ovoid cross-section of the connector will give a visual indication of relative rotation between the second member 38 and intermediate member 36. Thus, in Figure 10 the second member 38 is shown at one limit of its relative rotation which corresponds to the locking member 64 being aligned within the intermediate member 36 to present the opposed tapered surfaces 70 to the cam surface 56. The connecting member 45 is releasably secured within the intermediate member 36 in this position. The tapered surfaces 70 present a narrow wedge to the internal cam surface 56, and the connecting member 45 may be either inserted or withdrawn. Rotation of the second member 38 to the other limit of rotation, as shown by the direction of arrow 87 in Figure 12, results in a toothbrush having a smooth external surface, and locks the connector by presenting the conical surfaces 72 to the internal cam surfaces 56 on the connecting member 45. The conical surfaces 72 present a thick cone to the internal cam surfaces 56, which locks the connecting member 45 within the intermediate member 36 behind the retaining shoulder 78. In the locked condition, a pulling action on the first member 34 will result in the cam surfaces 56 abutting the conical surfaces 72. This prevents the resilient arms 46 from biasing inwardly, and they remain secured behind the retaining shoulder 78.

It should also be noted that the connector may be reversed, so that the locking member 64 may be located on the first member 44 and the connecting member 45 on the second member 38.

## Claims

1. A connector for releasably connecting a first member (44) to a second member (38), wherein said first member (44) includes a connecting member (45) extending therefrom, and said second member (38) includes a locking member (64) extending therefrom,
characterized in that said connector further comprises
an intermediate member (36) having a passageway (63) extending therethrough and defining a retaining shoulder (78) in said passageway (63) for releasable reciprocal connection to the connecting member (45); and
means (66,82) for connecting the locking member (64) to the intermediate member (36) for relative rotation therebetween,
the arrangement being such that when said locking member (64) is inserted in one end (39) of said passageway (63) said means (66,82) co-operate to permit said locking member (64) to be rotated relative to said intermediate member (36) whilst inhibiting separation of said second member (38) and said intermediate member (36), and when said connecting member (45) is inserted in the other end (37) of said passageway (63) said connecting member (45) engages said retaining shoulder (78), rotation of said locking member (64) to a first position relative to said connecting member (45) inhibiting separation of said first member (44) from said intermediate member (36) and rotation of said locking member (64) to a second position relative to said connecting member (45) permitting withdrawal of said connecting member (45) from said passageway (63) and thereby separation of said first member (44) from said second member (38).

2. A connector according to Claim 1, characterized in that the locking member (64) is releasably connected to the intermediate member (36).

3. A connector as claimed in Claim 1 or 2, characterized in that said connecting member (45) includes two resilient arms (46), the ends (48) of each of said resilient arms (46) having retaining surfaces (57) for co-operation with said retaining shoulder (78) of said intermediate member (36).

4. A connector as claimed in Claim 3, characterized in that said ends (48) of each of said resilient arms (46) have forward conical guide surfaces (54) for co-operation with the inner surface of said passageway (63).

5. A connector as claimed in Claim 3 or 4, characterized in that said ends (48) of each of said resilient arms (46) have internal cam surfaces (56) for co-operation with said locking member (64).

6. A connector as claimed in any preceding Claim, characterized in that said locking member (64) includes a circular rod having a slot (65) through the rod, said means for connecting the locking member (64) to the intermediate member (36) comprising detent means (66) on the outer surface of said circular rod and detent grooves (82) in said intermediate member (36) having enlarged stop portions (84) for co-operation with said detent means (66).

7. A connector as claimed in any preceding Claim, characterized in that said locking member (64) comprises a rod having a pair of opposed tapered surfaces (70) and a pair of opposed conical surfaces (72) for juxtaposition with respect to said connecting member (45).

8. A connector as claimed in any preceding Claim, characterized in that said first member (44) comprises a toothbrush head.

9. A method for releasably connecting and locking a first member (44) to a second member (38) which method comprises:
providing said first member (44) with a connecting member (45); and
providing said second member (38) with a locking member (64);
characterized in that said method further comprises:
providing an intermediate member (36) having a passageway (63) therethrough;
providing a retaining shoulder (78) in said passageway (63) for releasable reciprocal connection to the connecting member (45);
providing said locking member (64) and said intermediate member (36) with means (66, 82) for connecting the locking member (64) to the intermediate member (36) for relative rotation therebetween;
providing said locking member (64) with means (70, 72) rotatable to inhibit disconnection of the connecting member (45) of the first member (44) from the retaining shoulder (78) of the intermediate member (36) when said connecting member (45) of said first member (44) is inserted in said intermediate member (36);
bringing the connecting member (45) and the locking member (64) into operative juxtaposition within said passageway (63) of said intermediate member (36) and rotating said locking member (64) to a position in which said means (72) inhibits separation of said first member (44) from said intermediate member (36).

## Patentansprüche

1. Verbindungseinrichtung zum lösbaren Verbinden eines ersten Teils (44) mit einem zweiten Teil (38), wobei das erste Teil (44) ein vorspringendes Verbindungsstück (45) und das zweite Teil (38) ein vorspringendes Verschlußstück (64) aufweist, dadurch gekennzeichnet, daß die Verbindungseinrichtung ferner ein Zwischenstück (36) mit einem Durchgang (63) und einer darin gebildeten Anschlagschulter (78) zur lösbaren, reziproken Verbindung mit dem Verbindungsstück (45) aufweist, und daß Elemente (66,82) zum Verbinden des Verschlußstücks (45) mit dem Zwischenstück (36) durch eine relative Drehung zwischen diesen Teilen vorgesehen sind, wobei die Anordnung derart ausgebildet ist, daß nach dem Einsetzen des Verschlußstücks (64) in ein Ende (39) des Durchgangs (63) die Elemente (66, 82) zusammenwirken, um das Verschlußstück (64) relativ zum Zwischenstück (36) drehen und eine Trennung des zweiten Teils (38) vom Zwischenstück (36) verhindern zu können, und daß, wenn das Verbindungsstück (45) in das andere Ende (37) des Durchgangs (63) geschoben ist, dieses an der Anschlagschulter (78) liegt und eine Drehung des Verschlußstücks (64) in eine erste Position relativ zum Verbindungsstück (45) die Trennung des ersten Teils (44) vom Zwischenstück (36) verhindert und die Drehung des Verschlußstücks (64) in eine zweite Position relativ zum Verbindungsstück (45) das Herausziehen des Verbindungsstücks (45) aus dem Durchgang (63) ermöglicht und dadurch eine Trennung des ersten Teils (44) vom zweiten Teil (38) gestattet.

2. Verbindungseinrichtung nach Anspruch 1, dadurch gekennzeichnet, daß das Verschlußstück (64) lösbar mit dem Zwischenstück (36) verbunden ist.

3. Verbindungseinrichtung nach Anspruch 1 oder 2, dadurch gekennzeichnet, daß das Verbindungsstück (45) zwei elastische Arme (46) aufweist, daß die Enden (48) eines jeden elastischen Armes (46) Anschlagflächen (57) zum Zusammenwirken mit der Anschlagschulter (78) des Zwischenstücks (36) aufweisen.

4. Verbindungseinrichtung nach Ansprch 3, dadurch gekennzeichnet, daß die Enden (48) eines jeden elastischen Arms (46) nach vorn gerichtete, konische Leitflächen (54) zum Zusammenwirken mit der Innenfläche des Durchgangs (63) aufweisen.

5. Verbindungseinrichtung nach Anspruch 3 oder 4, dadurch gekennzeichnet, daß die Enden (48) eines jeden elastischen Arms (46) innere Nockenflächen (56) zum Zusammenwirken mit dem Verschlußstück (64) aufweisen.

6. Verbindungseinrichtung nach einem der vorhergehenden Ansprüche, dadurch gekennzeichnet, daß das Verschlußstück (64) aus einem Rundstab mit einem durchgehenden Schlitz (65) besteht, daß die Mittel zum Verbinden des Verschlußstücks (64) mit dem Zwischenstück (36) aus Verriegelungsteilen (66) an der Außenfläche des Stabes und Verriegelungsnuten (82) im Zwischenstück (36) mit vergrößerten Endteilen (84) für das Zusammenwirken mit den Verriegelungsteilen (66) bestehen.

7. Verbindungseinrichtung nach einem der vorhergehenden Ansprüche, dadurch gekennzeichnet, daß das Verschlußstück (64) aus einem Stab mit einem Paar sich gegenüberliegenden, geneigten Flächen (70) und einem Paar sich gegenüberliegenden, konischen Flächen (72) für eine Position unmittelbar neben dem Verschlußstück (45) besteht.

8. Verbindungseinrichtung nach einem der vorhergehenden Ansprüche, dadurch gekennzeichnet, daß das erste Teil (44) einen Zahnbürstenkopf aufweist.

9. Verfahren zum lösbaren Verbinden und Verriegeln eines ersten Teils (44) mit einem zweiten Teil (38) unter Bereitstellung eines ersten Teils (44) mit einem Verbindungsstück (45) und Bereitsstellung des zweiten Teils (38) mit einem Verschlußstück (64), gekennzeichnet durch
Bereitstellung eines Zwischenstücks (36) mit einem sich durch dieses erstreckenden Durchgang (63),
Bereitstellung einer Anschlagschulter (78) im Durchgang (63) zur lösbaren, reziproken Verbindung mit dem Verbindungsstück (45), Bereitstellung des Verschlußstücks (64) und des Zwischenstücks (36) mit Elementen (66, 82) zum Verbinden des Verschlußstücks (64) mit dem Zwischenstück (36) unter relativer Drehung zwischen diesen Teilen,
Bereitstellung des Verschlußstücks (64) mit drehbaren Elementen (70,72), um das Lösen des Verbindungsstücks (45) des ersten Teils (44) von der Anschlagschulter (78) des Zwischenstücks (36) zu verhindern, wenn das Verbindungsstück (45) des ersten Teils (44) in das Zwischenstück (36) eingesetzt ist, Zusammenführen des Verbindungsstücks (45) und des Verschlußstücks (64) in eine operative Juxtaposition innerhalb des Durchgangs (63) des Zwischenstücks (36) und Drehen des Verschlußstücks (64) in eine Position, in welcher die Elemente (72) eine Trennung des ersten Teils (44) vom Zwischenstück (36) verhindern.

## Revendications

1. Connecteur pour connecter de façon libérable un premier élément (44) à un second élément (38), dans lequel ledit premier élément (44) comprend un élément de connexion (45) s'étendant à partir dudit premier élément, et ledit second élément (38) comprend un élément de verrouillage (64) s'étendant à partir dudit second élément,
caractérisé en ce que ledit connecteur comprend, de plus,
un élément intermédiaire (36) comportant un passage (63) s'étendant à travers lui et définissant un épaulement de retenue (78) dans ledit passage (63) pour une connexion mutuelle libérable à l'élément de connexion (45); et
des moyens (66, 82) pour connecter l'élément de verrouillage (64) à l'élément intermédiaire (36) pour une rotation relative entre eux,
l'agencement étant tel que, lorsque ledit élément de verrouillage (64) est inséré à une extrémité (39) dudit passage (63), lesdits moyens (66, 82) coopèrent pour permettre audit élément de verrouillage (64) d'être tournés par rapport audit élément intermédiaire (36) tout en empêchant une séparation dudit second élément (38) et dudit élément intermédiaire (36) et , lorsque ledit élément de connexion (45) est inséré à l'autre extrémité (37) dudit passage (63), ledit élément de connexion (45) engage ledit épaulement de retenue (78), une rotation dudit élément de verrouillage (64) vers une première position relative par rapport audit élément de connexion (45) empêchant de séparer ledit premier élément (44) dudit élément intermédiaire (36) et une rotation dudit élément de verrouillage (64) vers une seconde position par rapport audit élément de connexion (45) permettant de retirer ledit élément de connexion (45) dudit passage (63) et permettant ainsi de séparer ledit premier élément (44) dudit second élément (38).

2. Connecteur selon la revendication 1, caractérisé en ce que l'élément de verrouillage (64) est connecté de façon libérable à l'élément intermédiaire (36).

3. Connecteur selon la revendication 1 ou 2, caractérisé en ce que ledit élément de connexion (45) comprend deux bras élastiques (46), les extrémités (48) de chacun desdits bras élastiques (46) comportant des surfaces de retenue (57) pour coopérer avec ledit épaulement de retenue (78) dudit élément intermédiaire (36).

4. Connecteur selon la revendication 3, caractérisé en ce que lesdites extrémités (48) de chacun desdits bras élastiques (46) comportent des surfaces de guidage coniques vers l'avant (54) pour coopérer avec la surface intérieure dudit passage (63).

5. Connecteur selon la revendication 3 ou 4, caractérisé en ce que lesdites extérmités (48) de chacun desdits bras élastiques (46) possèdent des surfaces de came intérieures (56) pour coopérer avec ledit élément de verrouillage (64).

6. Connecteur selon l'une quelconque des revendications précédentes, caractérisé en ce que ledit élément de verrouillage (64) comporte une tige circulaire possédant une fente (65) à travers la tige, lesdits moyens pour connecter l'élément de verrouillage (64) à l'élément intermédiaire (36) comprenant un moyen de positionnement (66) sur la surface extérieure de ladite tige circulaire et des rainures de positionnement (82) dans ledit élément intermédiaire (36) comportant des parties de butée agrandies (84) pour coopérer avec ledit moyen de positionnement (66).

7. Connecteur selon l'une quelconque des revendications précédentes, caractérisé en ce que ledit élément de verrouillage (64) comprend une tige comportant une paire de surfaces coniques opposées (70) et une paire de surfaces coniques opposées (72) pour venir en juxtaposition dudit élément de connexion (45).

8. Connecteur selon l'une quelconque des revendications précédentes, caractérisé en ce que ledit premier élément (44) comprend une tête de brosse à dents.

9. Procédé pour connecter et verrouiller de façon libérable un premier élément (44) à un second élément (38), lequel procédé consiste à :
prévoir ledit premier élément (44) avec un élément de connexion (45) ; et
prévoir ledit second élément (38) avec un élément de verrouillage (64) ;
caractérisé en ce que ledit procédé consiste de plus à :
prévoir un élément intermédiaire (36) comportant un passage (63) à travers lui ;
prévoir un épaulement de retenue (78) dans ledit passage (63) pour une connexion mutuelle libérable à l'élément de connexion (45) ;
prévoir ledit élément de verrouillage (64) et ledit élément intermédiaire (36) avec des moyens (66, 82) pour connecter l'élément de verrouillage (64) à l'élément intermédiaire (36) pour une rotation relative entre eux ;
prévoir ledit élément de verrouillage (64) avec des moyens (70,72) pouvant tourner pour empêcher de déconnecter l'élément de connexion (45) appartenant au premier élément (44) de l'épaulement de retenue (78) appartenant à l'élément intermédiaire (36) lorsque ledit élément de connexion (45) appartenant audit premier élément (44) est inséré dans ledit élément intermédiaire (36) ;
amener l'élément de connexion (45) et l'élément de verrouillage (64) en juxtaposition opérationnelle à l'intérieur dudit passage (63) dudit élément intermédiaire (36) et en faisant tourner ledit élément de verrouillage (64) vers une position dans laquelle ledit moyen (72) empêche de séparer ledit premier élément (44) dudit élément intermédiaire (36).
